# EUROPEAN PATENT APPLICATION

(11) **EP 1 649 914 A1**
(43) Date of publication of application: **26.04.2006**
(21) Application number: 05077449.6
(22) Date of filing: 25.10.2005
(51) Int. Cl.: B01D 29/27

(54) **Fluid filter having filter basket and method**

(30) Priority: 25.10.2004 US 972978
(71) Applicant: Howard W. Morgan, Filter Specialists, Incorporated, Michigan City, Indiana 46361 (US)
(72) Inventor: Howard W. Morgan, Filter Specialists, Incorporated, Michigan City, Indiana 46361 (US)
(74) Representative: O'Neill, Brian

(57) **Abstract**

A fluid filter assembly including a filter housing, a filter basket and a filter element and method of use. The filter basket has an unexpanded condition which allows it to be inserted into the fluid filter housing. During filtering operations, the filter basket expands and engages the interior surface of the filter housing at predefined locations. Filtered fluid discharged from the basket may flow between the filter housing and filter basket between the predefined locations of engagement. Radially outwardly extending projections on the filter basket may be used to engage the interior surface of the filter housing. The fluid element may include a bag filter.

## Description

### BACKGROUND OF THE INVENTION

### 1. Field of the Invention.

The present invention relates to fluid filters and, more specifically, to fluid filters that include a filter basket.

### 2. Description of the Related Art.

Fluid filters have many manufacturing and processing applications. For example, fluid filters are often used in chemical applications, water applications, paints and coatings applications, plastics and resin applications, electronics and semiconductor applications, utilities and power generation applications, food and beverage applications and pharmaceutical applications.

Conventional fluid filters typically utilize a filter element that takes the form of either a filter cartridge or a filter bag. When employing a filter bag, the fluid filter may also include a filter basket in which the filter bag is positioned. During filtering operations, the fluid flows into an open end of the filter bag and flows outwardly through the bag itself thereby trapping particles within the bag and filtering the fluid. As the fluid flows into the bag, the bag is expanded. In some fluid filters, the expansion of the filter bag could result in the bag engaging the interior surface of the filter vessel housing thereby preventing the outward flow of fluid through that portion of the bag and decreasing the effective filtering capacity of the bag. To prevent this from occurring, it is known to use filter baskets which are spaced inwardly from the interior surface of the filter housing to restrict the expansion of the filter bag and thereby maintain a space through which fluid may flow between the outer surface of the filter bag and the interior surface of the filter housing. Such filter baskets must have sufficient strength to withstand the hoop stress and other forces imparted to the filter basket by the expanded filter bag.

Although known filter baskets are effective, the use of such filter baskets can increase the cost of the fluid filter. A fluid filter assembly having an effective and relatively inexpensive filter basket is desirable.

### SUMMARY OF THE INVENTION

The present invention provides a fluid filter assembly that includes a relatively inexpensive filter basket. By providing the filter basket with outwardly extending projections that engage the interior surface of the filter housing, the filter housing may be used to withstand hoop stresses generated by the expanded filter bag instead of the filter basket. This, in turn, reduces the required strength of the filter basket and allows it to be manufactured using thinner sidewalls thereby reducing the material costs of the filter basket.

The invention comprises, in one form thereof, a fluid filter assembly that includes a filter housing with an interior surface defining a fluid passage having an inlet and an outlet. A filter basket having an open end and a basket portion defining a plurality of apertures is positionable in the fluid passage. The filter basket has a first configuration wherein the basket portion is insertable into the fluid passage with the basket portion and the interior surface defining a clearance therebetween and a second configuration wherein the filter basket is expanded outwardly relative to the first configuration and the basket portion engages the interior surface of the fluid passage at a plurality of spaced apart predefined locations. When the filter basket is in its second configuration engaged with the filter housing, the basket portion is spaced from the interior surface between the predefined locations to thereby permit fluid flowing through the filter housing from the inlet to the outlet to enter the filter basket through the open end, pass outwardly through the plurality of apertures in the basket portion and flow between the basket portion and the interior surface of the filter housing between the predefined locations.

The invention comprises, in another form thereof, a fluid filter assembly including a filter housing with an interior surface defining a fluid passage having an inlet and an outlet and a filter element adapted to filter a fluid passing therethrough. Also included is a filter basket disposed within the fluid passage and having an open end and a basket portion defining a plurality of apertures. The filter element is at least partially insertable through the open end of the filter basket and positionable within the basket portion. The expansion of the filter element is restricted by the basket portion of the filter basket. The filter basket also includes a plurality of outwardly extending projections disposed on the basket portion which are engageable with the interior surface of the filter housing. Expansion of the filter element within the filter basket biases the projections into engagement with the interior surface of the filter housing.

The present invention comprises, in yet another form thereof, a method of filtering a fluid. The method includes providing a filter housing with an interior surface defining a fluid passage having an inlet and an outlet, positioning a filter basket within the fluid passage and positioning a filter element within the filter basket. The method also includes passing fluid through the filter housing from the inlet to the outlet, filtering the fluid passing through the filter housing by passing the fluid through the filter element and expanding the filter element and biasing the filter basket outwardly when passing the fluid through the filter element. Additionally, the method includes engaging the interior surface of the filter housing with the filter basket at a plurality of predefined locations as the filter basket is biased outwardly by the expansion of the filter element and passing filtered fluid outwardly through the filter basket and between the interior surface of the filter housing and outer surface of the filter basket and between the plurality of predefined locations at which the filter basket engages the filter housing.

An advantage of the present invention is that by providing a fluid filter with a filter basket that can engage the interior surface of the filter housing at predefined locations while allowing fluid flow between the areas of engagement, the filter basket transfers forces to the filter housing. This, in turn, allows the filter basket to be relatively thin and thereby reduce the material costs associated with the manufacture of the filter basket.

### BRIEF DESCRIPTION OF THE DRAWINGS

The above mentioned and other features and objects of this invention, and the manner of attaining them, will become more apparent and the invention itself will be better understood by reference to the following description of an embodiment of the invention taken in conjunction with the accompanying drawings, wherein:
Figure 1 is a longitudinal sectional view of a fluid filter assembly in accordance with the present invention.
Figure 1A is a longitudinal sectional view of the fluid filter assembly of Figure 1 showing the filter cap and a sealing detail.
Figure 2 is a side view of the filter basket of Figure 1.
Figure 3 is an end view of the filter basket.
Figure 4 is a cross sectional partial view taken along line 4-4 of Figure 2.
Figure 5 is a cross sectional view taken along line 5-5 of Figure 2.
Figure 6 is an exploded view of detail 6 of Figure 1.

Corresponding reference characters indicate corresponding parts throughout the several views. Although the exemplification set out herein illustrates an embodiment of the invention, the embodiment disclosed below is not intended to be exhaustive or to be construed as limiting the scope of the invention to the precise form disclosed.

### DETAILED DESCRIPTION OF THE INVENTION

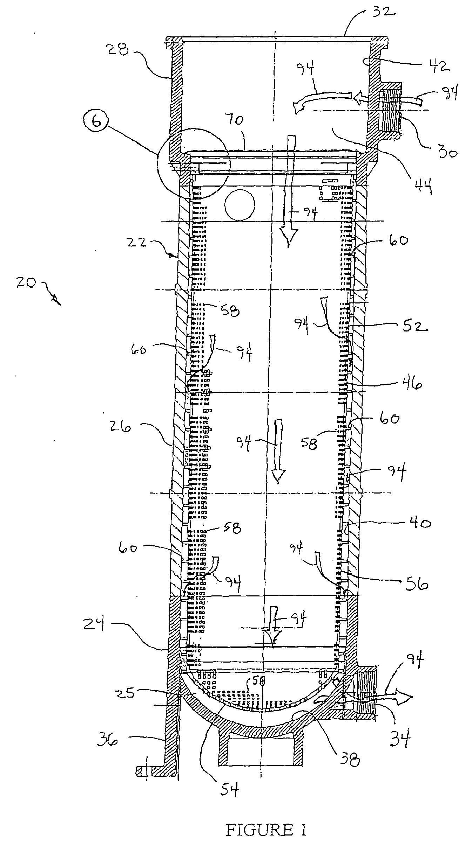

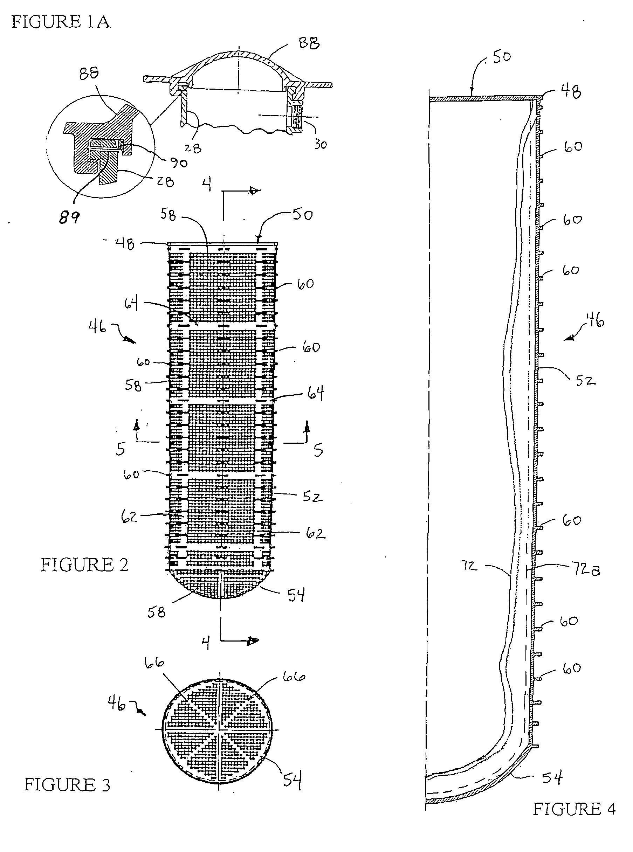

In accordance with the present invention a fluid filter assembly 20 is shown in Figure 1. Filter assembly 20 includes a filter vessel or housing 22 which includes a base section 24, a substantially cylindrical center section 26 and an upper section 28. The individual housing sections 24, 26, 28 may be joined together by any suitable means that provides a fluid tight seal therebetween such as welding. The housing sections may manufactured out of any suitable material such as 316 stainless steel, 304 stainless steel, carbon steel, or polypropylene. In the illustrated embodiment, the material used to manufacture the housing sections is polypropylene with 20% glass fiber fill. As known in the art, internal coatings may also be employed with the housing sections depending upon the material used to form the housing and the intended application of the fluid filter.

Upper section 28 has an inlet opening 30 through which fluid enters housing 22. A cap 88 is used to seal and close the open end 32 of upper housing section 28. As seen in Figure 1A, a V-shaped gasket 90 is used to seal the joint between cap 88 and upper housing section 28. Cap 88 may be removeably secured to upper housing section 28 using any suitable method such as interlocking camming surfaces or a threaded connection. Base section 24 has an outlet opening 34 through which fluid exits housing 22 and a plurality of legs 36 (only one of the three equally spaced legs is shown) that are used to support the fluid filter assembly. The base, center and upper housing sections 24, 26, 28 are all in fluid communication and have interior surfaces 38, 40, 42 that together define a fluid passage 44 from inlet 30 to outlet 34.

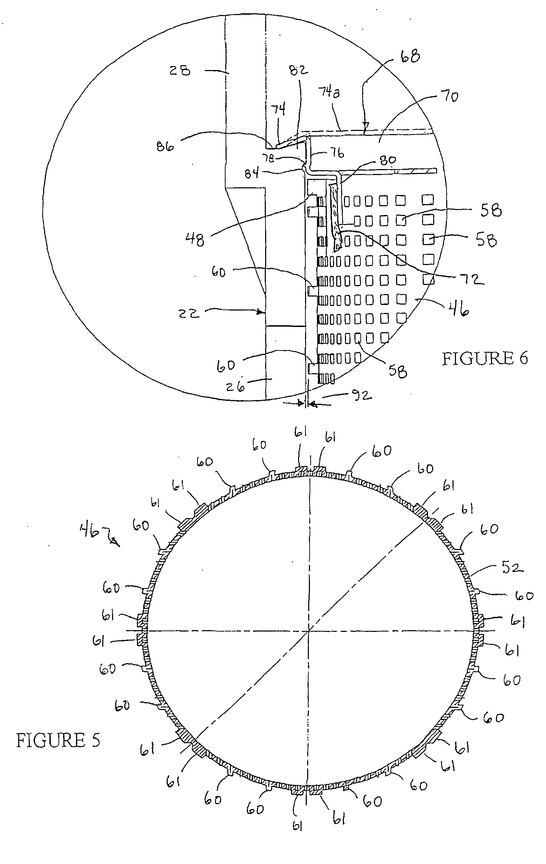

A reticulated filter basket 46 is located within the fluid passage 44 of filter housing 22. Filter basket 46 includes an annular upper end 48 defining an opening 50. A substantially cylindrical section 52 extends from annular upper end 48 with a closed end 54 located opposite open end 48. The cylindrical section 52 and closed end 54 define the basket portion 56 of filter basket 46 within which a filter element may be positioned. The cylindrical section 52 and closed end 54 both have a plurality of fluid apertures 58 through which fluid may pass outwardly through the filter basket. A plurality of projections 60 extend outwardly from cylindrical section 52 and are discussed in greater detail below. Longitudinally and circumferentially extending strengthening ribs, 62, 64 respectively, do not include any apertures 58 and thereby provide areas of enhanced strength. Closed end 54 includes similar diametrically extending strengthening ribs 66. In the illustrated embodiment, apertures 58 are approximately 1/8 inch square (3.2 mm) and are separated both longitudinally and circumferentially by approximately 1/8 inch (3.2 mm).
The thickness of basket portion 56 is approximately 1/4 inch (6.4 mm) and projections 60 extend radially outwardly by approximately 1/4 inch (6.4 mm). Alternative embodiments of the filter basket may be differently sized and configured. In the illustrated embodiment, filter basket 46 is polypropylene, however, other suitable materials may also be used to manufacture the filter basket. As can be seen in Figure 5, relatively large projections 61 are also used in addition to projections 60. The longitudinal and circumferential spacing of the projections 60, 61 are best seen in Figures 4 and 5 respectively. Projections 60, 61 are longitudinally spaced by approximately 0.7 inches (1.8 cm) in the illustrated embodiment.

Fluid filter assembly 20 also includes a filter element 68. In the illustrated embodiment, filter element 68 is a bag-type filter element which includes a mounting ring 70 and a filter bag 72. As best seen in the detail view of Figure 6, the mounting ring 70 includes a radially outer ring flange 74, a longitudinally extending section 76 with an annular rib 78 and a bag mounting portion 80. Dashed lines 74a show the relative position of outer ring flange 74 before ring 70 is secured within housing 22. As mounting ring 70 is pressed into the opening formed by annular shoulder 82 of upper housing section 28 from the position illustrated by dashed lines 74a, flange 74 is biased into contact with shoulder 82 and rib 78 is seated within groove 84. The seating of rib 78 within groove 84 securely retains mounting ring 70 in place with outer ring flange 74 tightly engaged with upper surface 86 of shoulder 82 to form a fluid tight seal therebetween. Mounting ring 70 may be formed out of any suitable material such as polypropylene, polyester, or nylon. It is also known to manufacture mounting rings out of non-polymeric materials such as steel. In the illustrated embodiment, ring 70 is a polypropylene material. Ring 70 may also include handles (not shown) extending across the opening formed by mounting ring 70 to facilitate its insertion and removal from filter assembly 20. Examples of such handles are disclosed in U.S. Patent No. 4,669,167 which is hereby incorporated herein by reference.

Filter bag 72 is a conventional nonwoven felt filter bag. Such filter bags may be formed from fibers of a variety of different materials such as polyester, polypropylene, nylon, nomex, TeflonⓇ or other suitable material as is well known to those having ordinary skill in the art. Filter bag 72 has an open end which is attached to annular mounting portion 80 of ring 70 by ultrasonic welding, stitching or other suitable means. Only the upper most portion of filter bag 72 adjacent to mounting ring 70 is shown in Figure 6. Filter bag 72 is not shown in Figure 1.
Figure 4 illustrates filter bag 72 in a relaxed condition without fluid flowing therethrough. Dashed line 72a in Figure 4 represents the position of filter bag 72 engaged with the interior surface of filter basket 46 as a result of fluid flowing through filter bag 72. Bag-type filter elements suitable for use with the present invention are commercially available from Filter Specialists, Inc. having a place of business in Michigan City, Indiana.

Prior to use of filter assembly 20, filter basket 46 and filter element 68 must be installed in housing 22. Initially, cap 88 is removed. Filter basket 46 is then longitudinally inserted in opening 32, through the body of upper housing section 28, and into the center section 26 of housing 22 to the position shown in Figure 1. Filter basket 46 is inserted into housing 22 in a first, unexpanded, configuration. In this condition, there is a clearance 92 (see Figure 6) between the radial outer surface of projections 60 and the interior surface 38, 40 of housing 22 which allows filter basket 46 to be easily inserted into housing 22. In the illustrated embodiment clearance 92 is approximately 1/32 inch (0.794 mm) and inner cylindrical surface 40 has a diameter of approximately 8.5 inches (21.6 cm). A spacing element such as diametrically extending rib 25 projects upwardly from the interior surface 38 of housing section 24 to engage closed end 54 and support filter basket 46. Although only one rib 25 is illustrated, several diametrically extending ribs 25 which intersect at the central axis of assembly 20 are provided (similar to the pattern of reinforcing ribs 66 on closed end 54. Rib 25 thereby defines an open pie piece shaped area below filter basket 46 into which filtered fluid may exit filter basket 46 and flow toward outlet 34 either directly or first radially outwardly of closed end 54, then upwardly above the height of ribs 25, and then circumferentially to outlet 34. Alternative configurations of spacing elements to maintain a space between closed end 54 and interior surface 38 may also be employed, for example, closed end could have spaced projections 60 to engage surface 38. Alternatively, upper end 48 may engage a shoulder or similar support to suspend filter basket 46 within fluid passage 44 and maintain an open area below filter basket 46.

After inserting filter basket 46, filter element 68 is installed in housing 22. Filter element 68 is also inserted through opening 32 and filter bag 72 is positioned within basket 56. Filter element 68 is secured by the snap-fit engagement of rib 78 and groove 84 as described above. Cap 88 is then mounted to upper housing section 28 to seal opening 32. Upper housing section 28 includes a vent bore 89 at its upper rim which is sealed by gasket 90 when cap 88 is properly seated. If the cap is not properly seated, liquid will seep form bore 89 when the filter is filled to alert the user.

Fluid is filtered by introducing the fluid into fluid passage 44 of housing 22 through inlet 30. Flow lines 94 indicate the direction of fluid flow within fluid filter assembly 20. The entering fluid flows through upper housing section 28 and enters filter bag 72 through the opening formed by mounting ring 70. The fluid then passes through the fibrous material forming filter bag 72 thereby trapping particles in the material of filter bag 72 and filtering the fluid. The fluid flows outwardly from filter bag 72 through apertures 58 in basket 56. Projections 60 maintain a space between basket 56 and the surrounding interior surface 40 of housing 22 through which the fluid then passes toward outlet 34 through which the now filtered fluid exits housing 22.

As fluid is forced through filter bag 72, a pressure gradient is created between the interior and exterior of bag 72. In the illustrated embodiment, the maximum pressure differential is approximately 65 psi (448 kPa). Because the interior of filter bag 72 is at a higher pressure, filter bag 72 expands outwardly and engages the interior surface of basket 46 as exemplified by dashed line 72a in Figure 4. Basket 46 limits the expansion of filter bag 72 and prevents it from directly engaging interior surface 40. This, in turn, biases basket 46 radially outwardly into a second, expanded configuration, causing projections 60 to engage interior surface 40 of housing 22. Projections 60 are located on the exterior of cylindrical section 52 of basket 46 at circumferentially and longitudinally spaced apart and predefined locations so that fluid passing outwardly through apertures 58 in basket 46 may flow between interior surface 40 and basket 46 between the individual projections 60 towards outlet 34. By constructing basket 46 out of a resilient material that returns to its original, unexpanded, configuration when there is no longer a pressure gradient acting on basket portion 56, the filter basket 46 may be more easily removed from housing 22 for routine maintenance or repair purposes.

During filtering operations, a tensile hoop stress is generated within center housing section 26 due to the radially outwardly directed fluid pressure within housing section 26. As known to those having ordinary skill in the art, the hoop stress in the wall of a hollow cylindrical body is the stress in the wall acting circumferentially in a plane perpendicular to the longitudinal axis of the cylindrical body and produced by radially outwardly directed forces acting on the cylindrical body. In a fluid filter having a conventional filter basket that is spaced inwardly from and does not engage the interior surface of the filter housing, the filter basket restrains the expansion of the filter bag and experiences a pressure differential that generates a tensile hoop stress within the filter basket. Such a conventional filter basket must have sufficient strength to withstand the hoop stress without failure.

In contrast to conventional filter baskets that do not engage the interior surface of the filter housing, illustrated filter basket 46 expands outwardly, allowing projections 60 to engage substantially cylindrical surface 40 when it is subject to a pressure differential created by filter operations. The engagement of projections 60 with interior surface 40 transfers radially outwardly directed forces to surface 40. By transferring a portion of the forces experienced by basket 46 to housing section 26, the tensile hoop forces which must be resisted by basket 46 are reduced allowing the thickness of the material used to form basket 46 to also be reduced. This, in turn, provides a material cost savings in the manufacture of filter basket 46. This transfer of forces to housing section 26 may increase the hoop forces experienced by housing section 26. The magnitude of such an increase, however, is unlikely to impact the design of the filter housing which is subject to other safety and performance considerations that are more likely to control the design strength of housing section 26. In the illustrated embodiment, housing section 26 has a thickness of approximately ½ inch (1.3 cm) and is polypropylene with 20% glass fiber fill.

It is noted that alternative embodiments of the present invention may also be employed. For example, it is also possible to have raised projections located on the interior surface of the housing sections which engage the outer surface of the filter basket to perform the same function as projections 60. Such an alternative embodiment, however, would not be as easily manufactured as the illustrated embodiment.

While this invention has been described as having an exemplary design, the present invention may be further modified within the spirit and scope of this disclosure. This application is therefore intended to cover any variations, uses, or adaptations of the invention using its general principles.

## Claims

1. A fluid filter assembly comprising:
a filter housing having an interior surface defining a fluid passage having an inlet and an outlet; and
a filter basket positionable in said fluid passage, said filter basket having an open end and a basket portion defining a plurality of apertures, said filter basket having a first configuration wherein said basket portion is insertable into said fluid passage with said basket portion and said interior surface defining a clearance therebetween, said filter basket having a second configuration wherein said basket portion is expanded outwardly relative to said first configuration and said basket portion engages said interior surface of said fluid passage at a plurality of spaced apart predefined locations and wherein said basket portion is spaced from said interior surface between said predefined locations to thereby permit fluid flowing from said inlet to said outlet to enter said filter basket through said open end, pass outwardly through said plurality of apertures in said basket portion and flow between said basket portion and said interior surface of said filter housing between said predefined locations.

2. The fluid filter of claim 1 further comprising a filter element adapted to filter a fluid passing therethrough, said fluid element being at least partially insertable through said open end of said filter basket, said basket portion restricting expansion of said filter element.

3. The fluid filter of claim 2 wherein said filter element includes a filter bag engageable with said basket portion.

4. The fluid filter of claim 1 wherein said filter basket includes a plurality of outwardly extending projections, engagement of said projections with said interior surface defining said plurality of predefined locations.

5. The fluid filter of claim 1 wherein said basket portion includes a substantially cylindrical section, said plurality of predefined locations being disposed on an outer radial surface of said substantially cylindrical section.

6. The fluid filter of claim 5 wherein said plurality of predefined locations include circumferentially and longitudinally spaced locations on said substantially cylindrical section.

7. The fluid filter of claim 1 wherein said filter basket comprises a resiliently expandable material.

8. The fluid filter of claim 1 wherein said filter basket comprises polypropylene.

9. A fluid filter assembly comprising:
a filter housing having an interior surface defining a fluid passage having an inlet and an outlet;
a filter element adapted to filter a fluid passing therethrough; and
a filter basket disposed within said fluid passage, said filter basket having an open end and a basket portion defining a plurality of apertures, said filter element being at least partially insertable through said open end and positionable within said basket portion, said basket portion restricting expansion of said filter element, said filter basket further including a plurality of outwardly extending projections disposed on said basket portion and being engageable with said interior surface of said filter housing wherein expansion of said filter element within said filter basket biases said projections into engagement with said interior surface.

10. The fluid filter assembly of claim 9 wherein said filter element includes a filter bag engageable with said basket portion.

11. The fluid filter assembly of claim 9 wherein said basket portion includes a substantially cylindrical section, said plurality of projections being disposed on a radially outer surface of said substantially cylindrical section.

12. The fluid filter assembly of claim 11 wherein said interior surface includes a substantially cylindrical portion for receiving said basket portion, said basket portion being radially outwardly expandable wherein said basket portion is insertable into said substantially cylindrical portion in an unexpanded condition wherein said projections and said interior surface define a clearance therebetween.

13. The fluid filter assembly of claim 12 wherein said basket portion comprises a resiliently expandable material.

14. The fluid filter assembly of claim 12 wherein said basket portion comprises a polypropylene material.

15. The fluid filter assembly of claim 9 wherein said filter basket includes a substantially cylindrical section, said open end being disposed at one end of said substantially cylindrical section, the other end of said substantially cylindrical section being a closed end defining a portion of said basket portion, said plurality of projections including projections circumferentially and longitudinally spaced on said substantially cylindrical section.

16. The fluid filter assembly of claim 15 wherein said basket portion includes a plurality of reinforcing ribs, said plurality of reinforcing ribs including circumferentially and longitudinally extending ribs located on said substantially cylindrical section.

17. A method of filtering a fluid, said method comprising:
providing a filter housing having an interior surface defining a fluid passage having an inlet and an outlet;
positioning a filter basket within the fluid passage;
positioning a filter element within the filter basket;
passing fluid through the filter housing from the inlet to the outlet;
filtering the fluid passing through the filter housing by passing the fluid through the filter element;
expanding the filter element and biasing the filter basket outwardly when passing the fluid through the filter element;
engaging the interior surface of the filter housing with the filter basket at a plurality of predefined locations as the filter basket is biased outwardly by the expansion of the filter element; and
passing filtered fluid outwardly through the filter basket and between the interior surface of the filter housing and outer surface of the filter basket and between the plurality of predefined locations at which the filter basket engages the filter housing.

18. The method of claim 17 wherein the step of positioning the filter basket within the fluid passage includes inserting the filter basket into the fluid passage in an unexpanded condition wherein there is a clearance between the filter basket and the interior surface of the filter housing and the step of engaging the interior surface of the filter housing with the filter basket at a plurality of predefined locations includes expanding the filter basket outwardly.

19. The method of claim 17 wherein the filter element includes a bag filter and the step of expanding the filter element and biasing the filter basket outwardly includes expanding the bag filter and engaging the filter basket with the expanded bag filter.

20. The method of claim 17 wherein the step of engaging the interior surface of the filter housing with the filter basket includes transferring radially outwardly directed forces from said filter basket to the filter housing.

21. The method of claim 20 wherein the filter basket includes a substantially cylindrical section positioned within a substantially cylindrical portion of the filter housing and the step of engaging the interior surface of the filter housing with the filter basket includes engaging the substantially cylindrical portion of the filter housing with the substantially cylindrical section of the filter basket by radially outwardly expanding the substantially cylindrical section of the filter basket.
